# EUROPEAN PATENT SPECIFICATION

(11) **EP 0 357 448 B1**
(45) Date of publication and mention of the grant of the patent: **17.04.1996**
(21) Application number: 89308867.4
(22) Date of filing: 01.09.1989
(51) Int. Cl.: H02M 3/335, H02H 3/20

(54) **Electrical power supplies**
Elektrische Stromversorgungen
Alimentations électriques de puissance

(30) Priority: 02.09.1988 GB 8820765
(43) Date of publication of application: 07.03.1990
(73) Proprietor: NEOPOST LIMITED, Romford, Essex RM1 2AR (GB)
(72) Inventor: Woodrow, Ronald William, Upminster Essex RM14 2EQ (GB)
(74) Representative: Loughrey, Richard Vivian Patrick

(56) References cited:
- DE-A- 3 525 942
- US-A- 3 327 128
- US-A- 4 288 831
- US-A- 4 559 592

## Description

This invention relates to power supplies and in particular to power supply circuits for energising electronic circuits of franking machines and incorporating means for monitoring over and under-voltage conditions of the power supply output.

US 3,327,128 relates to apparatus for protecting load circuitry supplied by a power supply having a plurality of output supplies. US 3,327,128 discloses an electrical power supply in which the outputs from two secondary windings of a transformer are independently rectified and regulated to provide power to load circuitry. The output connection from each of the secondary windings includes a relay winding which, in the event of an excess current condition in that output, closes a contact to connect an excess load to the other output such that there is an excess current condition in the other output also. The excess current overloading of the electrical power outputs from both secondary windings causes a fuse in the primary circuit to blow.

According to one aspect of the invention an electrical power supply including a transformer having a primary winding for input of electrical power, a first secondary winding and a second secondary winding; said first and second secondary windings being electromagnetically coupled to said primary winding for energisation by the electrical power input to the primary winding; first and second power output terminals to receive electrical power output from said first and second secondary windings respectively; a fault detector connected to said first power output terminal operative in responsive to a first fault condition at said first power output terminal to cause termination of electrical power input to the primary winding; and a coupling from the second power output terminal to the first power output terminal effective upon occurrence of a second fault condition at said second power output terminal to produce the first fault condition at the first power output terminal to cause operation of the fault detector is characterised by electromagnetic coupling in said transformer between the first and second secondary windings of the transformer, said electromagnetic coupling between said first and second secondary windings solely being effective upon occurrence of the second fault condition at the second power output terminal to produce the first fault condition at the first power output terminal to operate the fault detector to terminate input of electrical power to the primary winding whereby the fault detector is operative in response to occurrence of the first fault condition at the first power output terminal and to the occurrence of the second fault condition at the second power output terminal.

According to another aspect of the invention a method of monitoring fault conditions at first and second power output terminals of an electrical power supply in which the first power output terminal receives electrical power from a first secondary winding of a transformer and the second power output terminal receives electrical power from a second secondary winding of said transformer and electrical power is input to said transformer by a primary winding , the method including the steps of connecting a fault detector to said first power output terminal, the fault detector being operative in response to a fault condition at the first power output terminal and providing a coupling from the second power output terminal to the first power output terminal to cause operation of the fault detector upon occurrence of a fault at the second power output terminal is characterised by the steps of providing electromagnetic coupling between the first and second secondary windings and utilising only said electro-magnetic coupling between the first and second secondary windings to provide the coupling from the second power output terminal to the first power output terminal to operate the fault detector upon occurrence of a fault condition at the second power output terminal.

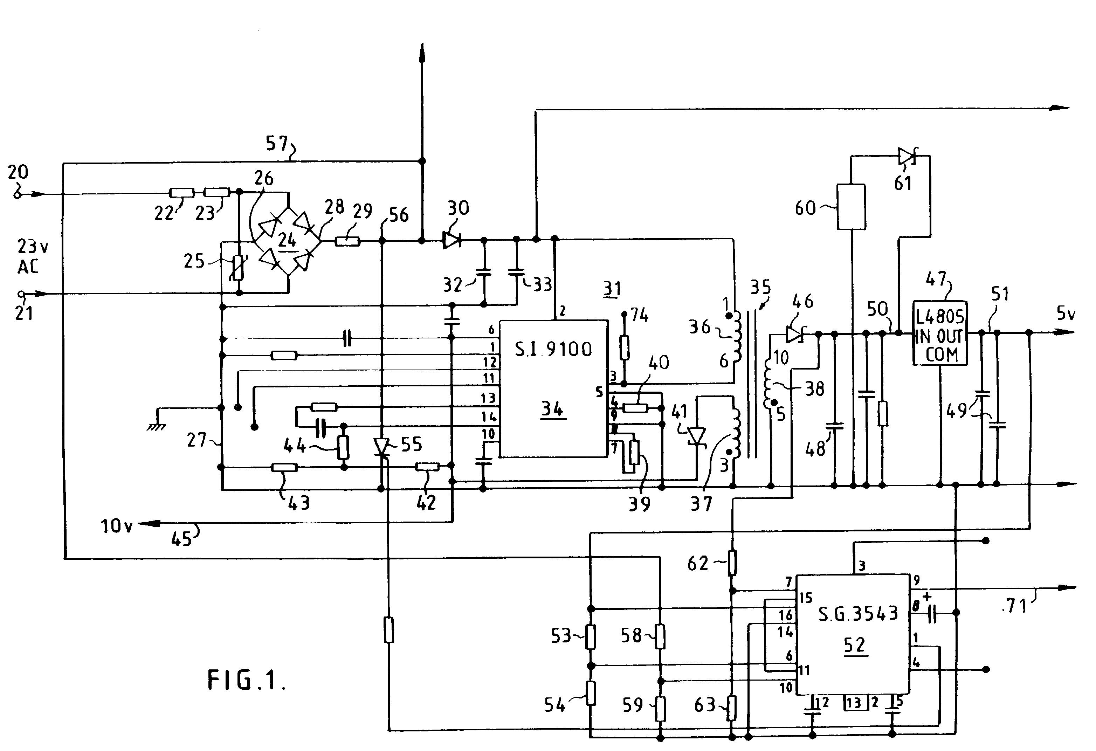

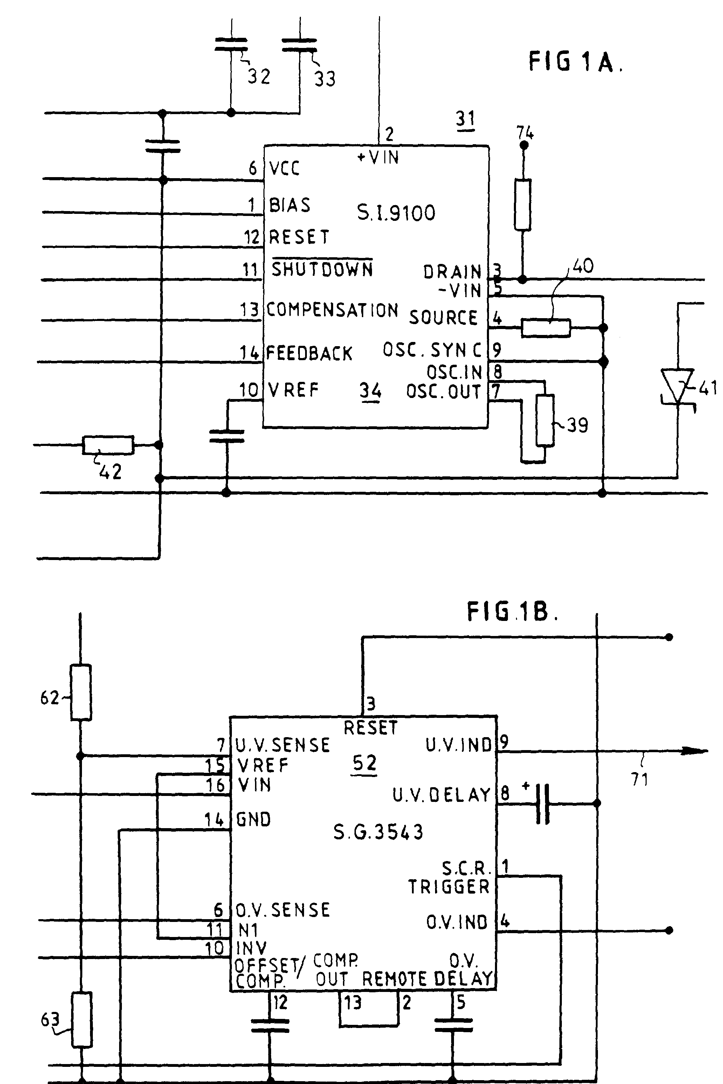

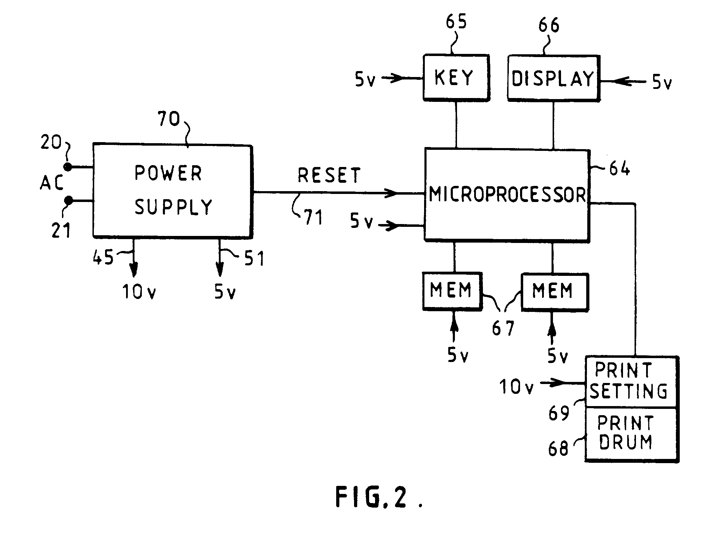

An embodiment of the invention will now be described by way of example with reference to the drawings in which Figure 1 is a circuit diagram of a switch mode power supply incorporating over and under-voltage monitoring in accordance with the invention, and Figure 2 is a block diagram illustrating the use of the power supply to provide power to a franking machine.

Referring first to Figure 1, a 23V AC power input is obtained from a mains electricity supply by means of a transformer (not shown) and is applied to terminals 20, 21. This power input is applied through a temperature sensing fuse 22 and a fusible resistor 23, connected in series, to a bridge rectifier 24. The fusible resistor 23 serves to limit the inrush of current when the AC power is applied to the circuit. A voltage dependent resistor 25 is connected across the input to the bridge rectifier, the resistor having a characteristic such that its resistance decreases with increasing voltage across the resistor. Therefore if an excessive voltage is applied to the terminals 20, 21, the voltage dependent resistor goes to a low resistance state thereby increasing the current flow through the fusible resistor 23 and causing that resistor to fuse and go open circuit. As a result the power input is terminated thereby preventing damage to the power supply circuit and electronic circuits energised thereby. The temperature sensing fuse is fitted when it is desired to provide evidence of any overheating of the circuits. A negative output terminal 26 of the bridge rectifier 24 is connected to a ground line 27. A positive output terminal 28 is connected through a fuse 29 and rectifier 30 to provide an unregulated DC supply to a switch mode power module 31. A reservoir capacitor 32 and a capacitor 33, providing a low impedance at very high frequency are connected between the unregulated DC supply and ground. The switch mode power module is a switching pulse width modulated regulator circuit comprising a semi-conductor circuit component 34 driving an electromagnetic energy storage component 35. The electromagnetic component 35 consists of a primary winding 36 electromagnetically coupled to a feedback secondary winding 37 and a further secondary winding 38. The semi-conductor circuit component 34 includes an oscillator, a preregulator/start-up circuit, a precision voltage reference, a current mode controller and a MOSFET switching transistor. The component includes over-current protection and under-voltage lockout. A commercially available component is a type No. S.I. 9100 marketed by Siliconix. The switching frequency is determined by resistor 39, connected between pins numbered 7 and 8 of the component, and is nominally 100kHz. Current pulses are fed to the primary winding 36 at the switching frequency which is substantially uniform but the pulses have a variable width or duration which is dependent upon the energy drawn from the module 31. A resistor 40 sets the maximum magnitude of current permitted to flow in the primary winding 36. If the current exceeds this maximum magnitude internal control circuits in the semi-conductor component 34 operate to shut down the module 31. One end of the feedback winding 37 is connected to ground while the other end is connected through a rectifier diode 41, a potential divider consisting of resistors 42, 43 and a series resistor 44 to a feedback input terminal pin number 14 of the semi-conductor component 34. The resistance of the resistors 42, 43 is chosen such that the voltage at the junction between the diode 41 and the resistor 42 is maintained at 10v and this voltage is utilised to supply power to various devices requiring power at this voltage of 10v on line 45. One end of the secondary winding 38 is connected to ground while the other end is connected through a rectifier diode 46 to an input of a low drop-out voltage regulator 47. A suitable component is type no. L4805 marketed by SGS. A reservoir capacitor 48 is connected between the input 50 of voltage regulator 47 and ground. In addition by-pass capacitors 49 are connected between the input 50 of voltage regulator and ground and between an output 51 of the regulator 47 and ground. The regulator 47 provides a regulated 5v supply at the output 51.

A monitor circuit comprising a semi-conductor circuit component 52 is provided to detect any over-voltage condition arising on the regulated 5v supply at the output 51. A suitable semi-conductor component is type No. S.G. 3543 marketed by Silicon General. Such over-voltage conditions may arise due to faults in the power supply circuit or due to the deliberate application of excessive voltage to the circuits of the franking machine in a fraudulent attempt to misuse the franking machine. The regulated 5v supply is connected to the component 52 to power the component on pin number 16 and in addition a potential divider comprising resistors 53, 54 applies a proportion of the 5v supply to an over-voltage sense input pin number 6 of the component 52. If the component 52 detects a rise of voltage on pin number 6 above a predetermined magnitude, a trigger signal is output on pin number 1 to trip a voltage controlled rectifier or thyristor 55 which is connected from the junction 56 of fuse 29 and rectifier 30 to ground 27. When thyristor 55 is tripped it presents a very low resistance or short circuit and causes the fuse 29 to blow. As a result power input is removed from the switch mode power supply module 31 and the circuits of the franking machine are no longer powered. The circuit component 52 also monitors the output of the bridge rectifier 24 to detect any failure of the power input. Accordingly the junction 56 of the fuse 29 and rectifier 30 is connected by line 57 through a potential divider comprising resistors 58, 59 to a further terminal pin number 10 of the component 52. It will be appreciated that after power has been applied to the power input terminals 20, 21, the reservoir capacitor 32 becomes charged and will retain its charge for some considerable time after power failure. Accordingly, the rectifier 30 is provided to isolate the reservoir capacitor 32 from the line 57. Thus the monitor circuit can detect a failure of power input immediately without any delay which otherwise would occur due to waiting for the capacitor 32 to discharge. In order to provide power to the monitor component 52 and the franking machine circuits in the event of power failure, a battery 60 is connected through an isolating rectifier 61 to the input of the voltage regulator 47. The unregulated input to the voltage regulator 47 is monitored by the monitor component 52 by a connection through a potential divider comprising resistors 62, 63 to an under-voltage sense input terminal pin number 7 of component 52. In the event that the voltage at the input to the regulator 47 falls below a predetermined magnitude, the monitor outputs a signal on terminal pin number 9 which is connected to a microprocessor of the franking machine circuits to assert a reset of the processor circuits.

Referring now to Figure 2, a franking machine comprises a microprocessor 64 which performs accounting and control functions, a keyboard 65 for input of data to the microprocessor, a display 66 for the display of data, memories 67 for storing accounting data generated by the microprocessor relating to usage of the franking machine and a printing device such as a print drum 68 for the printing of franking impressions on mail items. The print drum 68 includes selectively settable print elements such as print wheels to enable different values of franking to be printed. The print wheels are set to the selected value by means 69 comprising setting mechanisms driven by electric motors. The value of franking printed by the drum 68 is controlled by the microprocessor 64 by selective operation of the motors of the means 69 in dependence upon a selected value of franking input to the microprocessor by means of the keyboard. The components of the franking machine are powered by means of the power supply 70 described hereinbefore with reference to Figure 1. The 5v output on line 51 is utilised to power the electronic components including the microprocessor 64, keyboard 65, display 66 and memories 67 and the 10v supply on line 45 is utilised to power the electric motors of the print element setting means 69. The output on pin 9 of the monitor 52, generated in the event of the voltage input to the regulator 47 falling below a predetermined magnitude, is connected by means of line 71 to a reset input of the microprocessor to cause a reset of the microprocessor circuits to occur.

It will be appreciated that any fraudulent attempt to misuse the franking machine by application of voltages above those normally present during operation of the machine may result in the application of excessive voltage not only to the 5v supply on output 51 but also to the 10v supply on output 43. Accordingly it is required that this output also be monitored for over-voltage conditions. Clearly this could be accomplished by providing an additional monitor circuit. However this is undesirable not only from the additional cost but also from the space occupied by any such additional circuit. The feedback winding 37 of the transformer 35 from which the 10v supply is obtained is electromagnetically coupled to the secondary winding 38 from which the 5v supply is obtained. As a result when the current of the 10v supply on output 43 increases, the voltage output of the secondary winding 38 increases. Conversely when the current drawn from the 10v supply decreases the voltage output of the winding 38 decreases. Therefore should a fault in the loading of the 10v supply on output 43 occur, it is reflected to the 5v supply and is detected by the monitor circuit 52.

## Claims

1. An electrical power supply including a transformer (35) having a primary winding (36) for input of electrical power, a first secondary winding (37) and a second secondary winding (38); said first and second secondary windings (37, 38) being electromagnetically coupled to said primary winding (36) for energisation by the electrical power input to the primary winding; first and second power output terminals (45, 50) to receive electrical power output from said first and second secondary windings respectively; a fault detector (52) connected to said first power output terminal (50) operative in responsive to a first fault condition at said first power output terminal (50) to cause termination of electrical power input to the primary winding (36); and a coupling from the second power output terminal (45) to the first power output terminal (50) effective upon occurrence of a second fault condition at said second power output terminal (45) to produce the first fault condition at the first power output terminal to cause operation of the fault detector (52)
characterised by electromagnetic coupling in said transformer between the first and second secondary windings (37, 38) of the transformer (35), said electromagnetic coupling between said first and second secondary windings solely being effective upon occurrence of the second fault condition at the second power output terminal to produce the first fault condition at the first power output terminal to operate the fault detector to terminate input of electrical power to the primary winding whereby the fault detector is operative in response to occurrence of the first fault condition at the first power output terminal and to the occurrence of the second fault condition at the second power output terminal.

2. An electrical power supply as claimed in claim 1 further characterised in that electrical power input to the primary winding (36) of the transformer (35) is controlled by a switch circuit (34) and the transformer (35) and switch circuit (34) operate as a switch mode power supply module (31).

3. An electrical power supply as claimed in claim 2 further characterised in that the second secondary winding (37) is connected as a feedback winding for the switch mode power module (31).

4. An electrical power supply as claimed in any preceding claim further characterised in that the fault detector (52) when operated in response to the first fault condition or in response to the second fault condition generates a control signal to reset electronic apparatus (64) powered by the power supply.

5. An electrical power supply as claimed in any preceding claim including a fuse (29) in series with the electrical power input to the primary winding (36) further characterised by a switch operable to connect the fuse (29) across the electrical power input to blow the fuse; said switch being operable by operation of the fault detector (52) in response to a fault condition at the first or second power output terminals (45, 50).

6. An electrical power supply as claimed in any preceding claim further characterised in that the fault detector (52) is operated in response to an over-voltage fault condition at the first or second power output terminals (45, 50).

7. An electrical power supply as claimed in any preceding claim further characterised in that the fault detector (52) is operated in response to an under-voltage fault condition at the first or second power output terminals (45, 50).

8. An electrical power supply as claimed in any preceding claim when incorporated in a franking machine with the first power output terminal (50) connected to supply electrical power to electronic accounting and control circuits (64) of the franking machine and the second power output terminal (45) connected to supply electrical power to an electric drive motor of the franking machine.

9. A method of monitoring fault conditions at first and second power output terminals (45, 50) of an electrical power supply in which the first power output terminal (45) receives electrical power from a first secondary winding (37) of a transformer (35) and the second power output terminal (50) receives electrical power from a second secondary winding (38) of said transformer (35) and electrical power is input to said transformer (35) by a primary winding (36), the method including the steps of connecting a fault detector (52) to said first power output terminal (50), the fault detector (52) being operative in response to a fault condition at the first power output terminal (50) and providing a coupling from the second power output terminal (45) to the first power output terminal (50) to cause operation of the fault detector (52) upon occurrence of a fault at the second power output terminal (45)
characterised by the steps of providing electromagnetic coupling between the first and second secondary windings and utilising only said electro-magnetic coupling between the first and second secondary windings (37, 38) to provide the coupling from the second power output terminal (45) to the first power output terminal (50) to operate the fault detector (52) upon occurrence of a fault condition at the second power output terminal (45).

## Patentansprüche

1. Elektrische Stromversorgung mit einem Transformator (35) mit einer Primärwindung (36) für eine Eingangsspannung, einer ersten Sekundärwindung (37) und einer zweiten Sekundärwindung (38), wobei die ersten und zweiten Sekundärwindungen (37,38) elektromagnetisch mit der Primärwindung (36) verbunden sind, um durch das Hineinschicken von Elektrizität in die Primärwindung mit Energie versorgt zu werden; und mit ersten und zweiten Stromausgangsterminals (45,50) zum Empfang einer elektrischen Stromausgabe von den jeweils ersten und zweiten Sekundärwindungen; mit einem Fehlerdetektor (52), der mit dem ersten Stromausgangsterminal (50) verbunden ist und wirksam ist, bei einer ersten Fehlerbedingung in dem ersten Stromausgangsterminal (50) die elektrische Stromeingabe in die Primärwindung (36) zu unterbrechen; und mit einer Verbindung von dem zweiten Stromausgangsterminal (45) zu dem ersten Stromausgangsterminal (50), die wirksam ist, sobald eine zweite Fehlerbedingung in dem zweiten Stromausgangsterminal (45) vorliegt, um die erste Fehlerbedingung in dem ersten Stromausgangsterminal zu produzieren, um eine Betätigung des Fehlerdetektors (52) auszulösen,
gekennzeichnet durch
eine elektromagnetische Verbindung in dem Transformator zwischen den ersten und den zweiten Sekundärwindungen (37,38) des Transformators (35), wobei die elektromagnetische Verbindung zwischen den ersten und zweiten Sekundärwindungen allein wirksam ist nach dem Eintreten der zweiten Fehlerbedingung in dem zweiten Stromausgangsterminal, um die erste Fehlerbedingung in dem ersten Stromausgangsterminal zu produzieren, um den Fehlerdetektor auszulösen, um die Eingabe von elektrischem Strom auf die Primärwindung zu unterbrechen, wobei der Fehlerdetektor wirksam ist in Reaktion auf das Vorkommen der ersten Fehlerbedingung in dem ersten Stromausgangsterminal und in Antwort auf das Vorkommen der zweiten Fehlerbedingung in dem zweiten Stromausgangsterminal.

2. Elektrische Stromversorgung nach Anspruch 1,
dadurch gekennzeichnet,
daß der elektrische Stromeingang zu der Primärwindung (36) des Transformators (35) durch eine Schalteinrichtung (34) gesteuert ist und der Transformator (35) und die Schalteinrichtung (34) wie ein Schaltmodusstromversorgungsmodul (31) arbeiten.

3. Elektrische Stromversorgung nach Anspruch 2,
dadurch gekennzeichnet,
daß die zweite Sekundärwindung (37) als eine Rückmeldewindung für das Schaltmodusstrommodul (31) verbunden ist.

4. Elektrische Stromversorgung nach einem der vorhergehenden Ansprüche,
dadurch gekennzeichnet,
daß der Fehlerdetektor (52) bei Bedienung in Antwort auf die erste Fehlerbedingung oder in Antwort auf die zweite Fehlerbedingung ein Steuersignal erzeugt, um eine elektronische Vorrichtung (64), die durch die Stromversorgung mit Strom versorgt wird, zurückzusetzen.

5. Elektrische Stromversorgung nach irgendeinem der vorhergehenden Ansprüche, mit einer Sicherung (29) in Serie mit dem elektrischen Stromeingang zu der Primärwindung (36)
gekennzeichnet durch
einen Schalter, bedienbar zur Verbindung der Sicherung (29) über den elektrischen Stromeingang zum Durchbrennen der Sicherung; wobei der Schalter bedienbar ist durch eine Betätigung des Fehlerdetektors (52) in Antwort auf eine Fehlerbedigung in den ersten oder zweiten Stromausgangsterminals (45,50).

6. Elektrische Stromversorgung nach irgendeinem der vorhergehenden Ansprüche,
dadurch gekennzeichnet,
daß der Fehlerdetektor (52) bedienbar ist in Antwort auf einen Überspannungsfehler in den ersten oder zweiten Stromausgangsterminals (45,50).

7. Elektrische Stromversorgung nach irgendeinem der vorhergehenden Ansprüche,
dadurch gekennzeichnet,
daß der Fehlerdetektor (52) bedienbar ist in Antwort auf einen Unterspannungsfehler in den ersten oder zweiten Stromausgangsterminals (45,50).

8. Elektrische Stromversorgung nach irgendeinem der vorhergehenden Ansprüche,
dadurch gekennzeichnet,
daß diese in eine Frankiermaschine eingebaut ist, wobei das erste Stromausgangsterminal (50) verbunden ist, um elektronische Abrechnungs- und Steuereinrichtungen (64) der Frankiermaschine mit Strom zu versorgen, und das zweite Stromausgangsterminal (45) verbunden ist, um einen elektrischen Antriebsmotor der Frankiermaschine mit elektrischem Strom zu versorgen.

9. Verfahren zur Überwachung von Fehlerbedingungen in ersten und zweiten Stromausgangsterminals (45,50) einer elektrischen Stromversorgung bei dem das erste Stromausgangsterminal (45) elektrischen Strom von einer ersten Sekundärwindung (37) eines Transformators (35) und das zweite Stromausgangsterminal (50) elektrischen Strom von einer zweiten Sekundärwindung (38) eines Transformators (35) erhält, und wobei der elektrische Strom über eine Primärwindung (36) in den Transformator (35) eingegeben wird, wobei das Verfahren die Schritte einschließt, einen Fehlerdetektor (52) mit dem ersten Stromausgangsterminal (50) zu verbinden, der Fehlerdetektor (52) bedienbar ist in Antwort auf eine Fehlerbedingung in dem ersten Stromausgangsterminal (50) und eine Verbindung vorsieht zwischen dem zweiten Stromausgangsterminal (45) dem zu dem ersten Stromausgangsterminal (50) um beim Tätigwerden des Fehlerdetektors (52) zu wirken, sobald ein Fehler in dem zweiten Stromausgangsterminal (45) auftritt,
gekennzeichnet durch
die Schritte, eine elektromagnetische Verbindung zwischen den ersten und zweiten Sekundärwindungen vorzusehen und nur diese elektromagnetische Verbindung zwischen den ersten und zweiten Sekundärwindungen (37,38) zu gebrauchen, um eine Verbindung zwischen dem zweiten Stromausgangsterminal (45) zu dem ersten Stromausgangsterminal (50) herzustellen, um den Fehlerdetektor (52) zu bedienen, sobald eine Fehlerbedingung in dem zweiten Stromausgangsterminal (45) aufgetreten ist.

## Revendications

1. Alimentation de puissance électrique comprenant un transformateur (35) comportant un enroulement primaire (36) pour l'entrée de puissance électrique, un premier enroulement secondaire (37) et un second enroulement secondaire (38) ; le premier et le second enroulement secondaire (37, 38) étant couplés électromagnétiquement à l'enroulement primaire (36) pour être excités par la puissance électrique d'entrée de l'enroulement primaire ; une première et une seconde borne de sortie de puissance (45, 50) pour recevoir respectivement la puissance de sortie électrique du premier et du second enroulement secondaire ; un détecteur de défaut (52) branché à la première borne de sortie de puissance (50) et fonctionnant en réponse à une première condition de défaut à l'endroit de la première borne de sortie de puissance (50) pour produire la coupure de la puissance d'entrée électrique à l'enroulement primaire (36) ; et un couplage entre la seconde borne de sortie de puissance (45) et la première borne de sortie de puissance (50), ce couplage servant, à l'apparition d'une seconde condition de défaut à l'endroit de la seconde borne de sortie de puissance (45), à produire la première condition de défaut à la première borne de sortie de puissance, de manière à produire le fonctionnement du détecteur de défaut (52) ; caractérisée par un couplage électromagnétique, dans le transformateur, entre le premier et le second enroulement secondaire (37, 38) du transformateur (35), ce couplage électromagnétique entre le premier et le second enroulement secondaire fonctionnant uniquement, à l'apparition de la seconde condition de défaut à l'endroit de la seconde borne de sortie de puissance, pour produire la première condition de défaut à l'endroit de la première borne de sortie de puissance, de manière à faire fonctionner le détecteur de défaut pour qu'il coupe l'entrée de puissance électrique à l'enroulement primaire, ce qui permet ainsi de faire fonctionner le détecteur de défaut en réponse à l'apparition de la première condition de défaut à la première borne de sortie de puissance, et à l'apparition de la seconde condition de défaut à la seconde borne de sortie de puissance.

2. Alimentation de puissance électrique selon la revendication 1, caractérisée en outre en ce que l'entrée de puissance électrique à l'enroulement primaire (36) du transformateur (35), est contrôlée par un circuit de commutation (34), et en ce que le transformateur (35) et le circuit de commutation (34) fonctionnent comme un module d'alimentation de puissance (31) en mode commuté.

3. Alimentation de puissance électrique selon la revendication 2, caractérisée en outre en ce que le second enroulement secondaire (37) est branché en enroulement de rétroaction pour le module de puissance en mode commuté (31).

4. Alimentation de puissance électrique selon l'une quelconque des revendications précédentes, caractérisée en outre en ce que le détecteur de défaut (52), lorsqu'il est actionné en réponse à la première condition de défaut ou en réponse à la seconde condition de défaut, génère un signal de commande pour remettre à l'état initial l'appareil électronique (64) alimenté par l'alimentation de puissance.

5. Alimentation de puissance électrique selon l'une quelconque des revendications précédentes, comprenant un fusible (29) en série avec l'entrée de puissance électrique de l'enroulement primaire (36), caractérisée en outre par un commutateur servant à brancher le fusible (29) aux bornes de l'entrée de puissance électrique de manière à faire sauter ce fusible ; le commutateur pouvant être actionné par le fonctionnement du détecteur de défaut (52) en réponse à une condition de défaut à la première ou à la seconde borne de sortie de puissance (45, 50).

6. Alimentation de puissance électrique selon l'une quelconque des revendications précédentes, caractérisée en outre en ce que le détecteur de défaut (52) est actionné en réponse à une condition de défaut de surtension à la première ou à la seconde borne de sortie de puissance (45, 50).

7. Alimentation de puissance électrique selon l'une quelconque des revendications précédentes, caractérisée en outre en ce que le détecteur de défaut (52) est actionné en réponse à une condition de défaut de sous-tension à la première ou à la seconde borne de sortie de puissance (45, 50).

8. Alimeentation de puissance électrique selon l'une quelconque des revendications précédentes, lorsqu'elle est incorporée dans une machine à affranchir, la première borne de sortie de puissance (50) étant branchée pour fournir de la puissance électrique aux circuits électroniques de comptabilité et de commande (64) de la machine à affranchir, tandis que la seconde borne de sortie de puissance (45) est branchée pour fournir de la puissance électrique à un moteur électrique d'entraînement de la machine à affranchir.

9. Procédé de surveillance de conditions de défaut à l'endroit d'une première et d'une seconde borne de sortie de puissance (45, 50) d'une alimentation de puissance électrique dans laquelle la première borne de sortie de puissance (45) reçoit de la puissance électrique d'un premier enroulement secondaire (37) d'un transformateur (35), tandis que la seconde borne de sortie de puissance (50) reçoit de la puissance électrique d'un second enroulement secondaire (38) du transformateur (35), et que de la puissance électrique est appliquée à l'entrée du transformateur (35) par un enroulement primaire (36), le procédé comprenant les étapes consistant à brancher un détecteur de défaut (52) à la première borne de sortie de puissance (50), ce détecteur de défaut (52) fonctionnant en réponse à une condition de défaut à la première borne de sortie de puissance (50) et fournissant un couplage entre la seconde borne de sortie de puissance (45) et la première borne de sortie de puissance (50), de manière à produire le fonctionnement du détecteur de défaut (52) à l'apparition d'un défaut à la seconde borne de sortie de puissance (45) ; caractérisé par les étapes consistant à fournir un couplage électromagnétique entre le premier et le second enroulement secondaire, et à n'utiliser ce couplage électromagnétique qu'entre le premier et le second enroulement secondaire (37, 38), de manière à fournir le couplage entre la seconde borne de sortie de puissance (45) et la première borne de sortie de puissance (50) pour faire fonctionner le détecteur de défaut (52) à l'apparition d'une condition de défaut à l'endroit de la seconde borne de sortie de puissance (45).
